# EUROPEAN PATENT APPLICATION

(11) **EP 4 621 016 A1**
(43) Date of publication of application: **24.09.2025**
(21) Application number: 25165001.6
(22) Date of filing: 20.03.2025
(51) Int. Cl.: C09D 5/02, C09D 7/41, C09D 133/04, A01G 7/06, G09F 19/14, G09F 19/22, G09F 23/00

(54) **CHLOROPHYLL-BASED PAINT COMPOSITION AND PRODUCT**

(30) Priority: 20.03.2024 US 202418610513
(71) Applicant: Cecchetto Dasso, Juan Ignacio, 5000 Cordoba (AR)
(72) Inventor: Cecchetto Dasso, Juan Ignacio, 5000 Cordoba (AR)
(74) Representative: Soldatini, Andrea

(57) **Abstract**

A paint composition designed for turf, fields, and similar surfaces utilizes chlorophyll as its primary active ingredient. This paint's hue contrasts with the natural green of grass or turf, making it suitable for applying logos or advertisements on sports fields without distracting players. Spectators in the stands can clearly discern the logo or ad, while players on the field are not unduly affected. This chlorophyll-based paint composition for turf, fields, and similar applications consists of: Organic acrylic emulsion: 23%; Water: 30.35% - 65.25%; Bactericidal compound: 0.4%; Antifoam agent: 0.15%; Bioregulators: 2%; Cellulose thickener: 0.2%; Blending agent: 1%; and Chlorophyll pigment: 8% - 42.9%.

## Description

### FIELD OF THE INVENTION

The present invention is referred to turf paints, and more particularly to chlorophyll-based paints use to paint turf, fields, and the like.

### BACKGROUND OF THE INVENTION

Chlorophyll, the green pigment found in plants, has long been recognized for its health benefits when consumed as a dietary supplement or in juices and smoothies. However, its applications extend far beyond the realm of nutrition, with a growing number of industries discovering innovative uses for this versatile substance.

In the cosmetics industry, chlorophyll is increasingly being used as a natural ingredient in skincare products, such as facial creams, masks, and toners. Its high concentration of antioxidants, anti-inflammatory agents, and other nutrients make it an ideal ingredient for fighting the signs of aging, as well as for reducing redness, swelling, and other skin irritations. Additionally, its antibacterial properties make it a popular ingredient in products that help combat acne and other skin problems.

Another industry that has embraced the benefits of chlorophyll is agriculture. In this field, chlorophyll is often used as a natural fertilizer, helping to enrich the soil and promote plant growth. Additionally, it can be used to control pests and diseases by reducing the population of harmful insects and microorganisms. This makes it an attractive alternative to chemical-based pesticides, which can be harmful to the environment and human health.

Food and beverage manufacturers are also starting to incorporate chlorophyll into their products, using it as a natural colorant to replace synthetic dyes. This not only makes the products more appealing to consumers, but also eliminates the need for potentially harmful chemicals. For example, chlorophyll has been used to color products such as pasta, confectionery, and jelly, creating a more natural and healthier option.

The pharmaceutical industry is another area where chlorophyll is gaining popularity. Research has shown that chlorophyll has antibacterial, antiviral, and anti-inflammatory properties, making it an ideal ingredient for a range of health products, including wound dressings, mouthwashes, and oral supplements. These products can help to speed up the healing process and improve oral health, while also avoiding the use of harmful chemicals.

Chlorophyll is also being used in the field of environmental technology. Its ability to purify air and water makes it a valuable component in air and water filtration systems. This can help to reduce the amount of pollutants in the environment and improve air quality, making it a crucial tool in the fight against climate change and pollution.

Chlorophyll is a versatile and multifaceted substance that is being used in an ever-increasing number of industries. From cosmetics and agriculture to food and beverages, pharmaceuticals, and environmental technology, its numerous benefits are making it an increasingly popular ingredient in a range of products. With its natural origin, high nutritional value, and lack of harmful chemicals, chlorophyll is a valuable and sustainable resource that has the potential to make a real impact in a variety of industries.

Paint is a versatile medium that can be used to create a wide range of effects, including transforming the appearance of grass. Over the years, a variety of paints have been developed specifically for use on grass, each with its own unique properties and advantages. This application will examine the different types of paints used to paint grass, their benefits, and how they are used.

One of the most popular paints used to paint grass is turf paint. This paint is specifically designed to be used on sports fields and other areas of grass and is available in a range of colors. Turf paint is formulated to be water-resistant and long-lasting, ensuring that it will remain visible even after rain or other weather conditions. It is also designed to be non-toxic and safe for the environment, making it a popular choice for schools, parks, and other public spaces.

Another type of paint used to paint grass is temporary spray paint. This paint is designed to be quick and easy to apply and is often used for temporary events, such as outdoor festivals and sporting events. Temporary spray paint is formulated to be water-resistant and long-lasting, ensuring that it will remain visible even after rain or other weather conditions. It is also designed to be safe for the environment and is available in a range of bright and vibrant colors.

Chalk paint is another type of paint used to paint grass. This paint is formulated to be water-soluble and easily washable, making it an ideal choice for temporary events and activities, such as outdoor games and competitions. Chalk paint is available in a range of colors and is often used to create bright and colorful markings on grass, making it a popular choice for families and children.

Grass paint is another option for those looking to paint grass. This paint is specifically designed to be used on grass and is available in a range of colors. Grass paint is formulated to be long-lasting and resistant to fading, ensuring that it will remain visible for a long period of time. Additionally, it is formulated to be safe for the environment and non-toxic, making it an ideal choice for families and children.

The use of paint to paint grass has become increasingly popular in recent years, with a variety of different paints available to suit different needs and applications. From turf paint and temporary spray paint to chalk paint and grass paint, there is a paint available to meet the needs of anyone looking to transform the appearance of their grass. Whether for sports fields, festivals, or simply for fun, these paints offer a quick, easy, and effective way to add color and excitement to any area of grass.

### PAINT COMPONENTS

Turf paint: The first component of turf paint is the pigment. Pigments are the coloring agents in paint and are what give the paint its color. In the case of turf paint, high-quality, water-resistant pigments are used to ensure that the markings will remain visible for a long period of time, even in adverse weather conditions. Pigments are typically made up of colored particles suspended in a liquid or binder, which is the next component of turf paint.

The binder, also known as the medium or vehicle, is what holds the pigment in suspension and allows it to be applied to the surface. In the case of turf paint, high-quality binders are used to ensure that the paint dries quickly and provides a long-lasting finish. Binders are typically made up of a mixture of solvents, resins, and other ingredients, which help to create a durable and flexible film.

The solvents used in turf paint are also an important component. Solvents are used to thin the paint and make it easier to apply, as well as to control the drying time. In the case of turf paint, water-resistant solvents are used to ensure that the markings will remain visible even after rain or other weather conditions.

Another component of turf paint is the additives. Additives are substances that are added to the paint to enhance its properties and performance. For example, anti-fading agents are added to help prevent the color from fading over time, while anti-cracking agents help to prevent the paint from cracking or peeling. Anti-fungal and anti-bacterial agents may also be added to help prevent the growth of mold and other microorganisms, ensuring that the markings remain clean and hygienic.

Turf paint is made up of several key components, including pigments, binders, solvents, and additives. These components work together to create a paint that is durable, long-lasting, and resistant to fading, cracking, and other weather conditions. With the right combination of components, turf paint provides clear, bright markings that are ideal for athletic fields and other areas of grass, helping to make outdoor sports and activities more enjoyable and accessible for all.

Summing up, turf paint typically contains the following components:
- Pigment: Pigment is what gives the paint its color. High-quality, lightfast pigments are used in turf paint to ensure the paint remains vibrant and does not fade over time, even when exposed to sunlight and weather conditions.
- Binder: The binder is the component that holds the pigment in suspension and allows it to be applied to the grass. Turf paint is often made with a mixture of high-quality, water-based resins and polymers to create a durable and flexible film that adheres to the grass.
- Solvents: Solvents are used to thin the paint and make it easier to apply. In the case of turf paint, water-based solvents are typically used to ensure that the paint is safe and non-toxic.
- Additives: Additives are included in turf paint to enhance its performance. For example, anti-fading agents help prevent the color from fading, while anti-cracking agents prevent the paint from cracking or peeling. Anti-fungal and anti-bacterial agents may also be added to prevent the growth of mold and other microorganisms.
- Surfactants: Surfactants are added to turf paint to improve its spreading and wetting characteristics, helping to ensure that the paint covers the grass evenly and thoroughly.

Temporary spray paint: Despite its temporary nature, temporary spray paint is formulated to be long-lasting and resistant to fading and weathering, making it a popular choice for outdoor events, festivals, and activities. In this essay, we will examine the different components that make up temporary spray paint and the role they play in the final product.

The first component of temporary spray paint is pigment. Pigments are the coloring agents in paint and are what give the paint its color. In the case of temporary spray paint, high-quality, water-resistant pigments are used to ensure that the markings will remain visible for a long period of time, even in adverse weather conditions. Pigments are typically made up of colored particles suspended in a liquid or binder, which is the next component of temporary spray paint.

The binder, also known as the medium or vehicle, is what holds the pigment in suspension and allows it to be applied to the surface. In the case of temporary spray paint, high-quality binders are used to ensure that the paint dries quickly and provides a long-lasting finish. Binders are typically made up of a mixture of solvents, resins, and other ingredients, which help to create a durable and flexible film.

The solvents used in temporary spray paint are also an important component. Solvents are used to thin the paint and make it easier to apply, as well as to control the drying time. In the case of temporary spray paint, water-resistant solvents are used to ensure that the markings will remain visible even after rain or other weather conditions.

Another component of temporary spray paint is the propellant. Propellants are used to pressurize the paint and allow it to be sprayed from a can. In the case of temporary spray paint, high-quality, eco-friendly propellants are used to ensure that the paint is safe for the environment and does not harm plants or wildlife.

Finally, temporary spray paint may also contain additives to enhance its properties and performance. For example, anti-fading agents are added to help prevent the color from fading over time, while anti-cracking agents help to prevent the paint from cracking or peeling. Anti-fungal and anti-bacterial agents may also be added to help prevent the growth of mold and other microorganisms, ensuring that the markings remain clean and hygienic.

Temporary spray paint is made up of several key components, including pigments, binders, solvents, propellants, and additives. These components work together to create a paint that is quick and easy to apply, durable, and resistant to fading and weathering. With its combination of performance and convenience, temporary spray paint is an ideal choice for anyone looking to add color and markings to grass and other surfaces for short-term, temporary applications.

Chalk paint: Unlike traditional paints, chalk paint has a unique texture and finish that makes it ideal for distressing, layering, and creating vintage or shabby chic looks. In this essay, we will examine the components that make up chalk paint and the role they play in creating its signature look and feel.

The first component of chalk paint is pigment. Pigments are the coloring agents in paint and are what give the paint its color. In the case of chalk paint, high-quality, lightfast pigments are used to ensure that the paint will maintain its color and vibrancy for a long period of time. Pigments are typically made up of colored particles suspended in a liquid or binder, which is the next component of chalk paint.

The binder, also known as the medium or vehicle, is what holds the pigment in suspension and allows it to be applied to the surface. In the case of chalk paint, high-quality, non-toxic binders are used to ensure that the paint is safe and easy to use. Binders are typically made up of a mixture of resins, waxes, and other ingredients, which help to create a durable and flexible film.

Another important component of chalk paint is the texture agent. Texture agents are used to give the paint its signature rough and chalky feel, as well as to help the paint adhere to surfaces. In the case of chalk paint, high-quality, fine-grain texture agents are used to ensure that the paint dries quickly and provides a smooth and even finish.

Chalk paint may also contain a variety of additives to enhance its properties and performance. For example, anti-fading agents are added to help prevent the color from fading over time, while anti-cracking agents help to prevent the paint from cracking or peeling. Anti-fungal and anti-bacterial agents may also be added to help prevent the growth of mold and other microorganisms, ensuring that the paint remains clean and hygienic.

Chalk paint is made up of several key components, including pigments, binders, texture agents, and additives. These components work together to create a paint that is easy to apply, has a unique and signature finish, and is safe and long-lasting. With its versatility and creativity-inspiring properties, chalk paint has become a popular choice for artists, decorators, and DIY enthusiasts looking to add a touch of vintage charm to their projects.

Summing up, the composition of chalk paint can vary slightly between brands, but generally, it contains the following components:
- Pigment: Pigment is what gives the paint its color. Chalk paint typically uses high-quality, lightfast pigments to ensure the paint remains vibrant and does not fade over time.
- Binder: The binder is the component that holds the pigment in suspension and allows it to be applied to a surface. Chalk paint is often made with a mixture of high-quality, non-toxic resins and waxes to create a durable and flexible film.
- Texture agent: Texture agents are added to chalk paint to give it a unique, rough and chalky feel. These agents help the paint adhere to the surface and create a matte finish.
- Additives: Additives are included in chalk paint to enhance its performance. For example, anti-fading agents help prevent the color from fading, while anti-cracking agents prevent the paint from cracking or peeling. Anti-fungal and anti-bacterial agents may also be added to prevent the growth of mold and other microorganisms.
- Water: Some chalk paint formulas contain water to help thin the paint and make it easier to apply.

It's important to note that some chalk paint formulas may contain other ingredients such as fillers, thickeners, and stabilizers.

### BRIEF DESCRIPTION OF THE INVENTION:

There is a potential use for chlorophyll in paint is as an active ingredient. Some studies have shown that chlorophyll has antimicrobial properties, which means it could potentially be used to prevent the growth of mold, bacteria, and other harmful microorganisms. This could be particularly useful in the development of paints for use in environments where sanitation is important, such as hospitals, schools, and other public spaces.

It is important to note that while the potential uses of chlorophyll in paint are intriguing, more research was needed to fully understand its performance and durability. Additionally, the extraction and processing of chlorophyll can be complex and costly, which may limit its commercial viability.

The main purpose of the present invention is a new paint composition used to paint turf, fields, and the like using chlorophyll as an active main ingredient. Also, since this paint is green and differs from the green of the natural grass or turf, it may be also used to paint a logo or an advertisement on a sport field without distracting the field view of the players. The logo or ad can be clearly distinguished by the spectators in the stands but not by the players on the field.

### DETAILED DESCRIPTION OF THE INVENTION:

The present invention is referred to a new paint composition using chlorophyll as a main component, which general formulation is the following:
o Organic acrylic emulsion: 23%
o Water: 30.35 % - 65.25 %
o Bactericide: 0.4%
o Anti-foaming agent: 0.15%
o Blending agent: 1%
o Cellulose thickener: 0.2%
o Ph regulator: 0.3%
o Natural chlorophyll pigment 42.9%-8% (variable with water in tone intensity)

These are basic percentages that can be adjusted and defined as ranges without affecting the scope of protection of the present invention. More particularly, the formulation of the purposed paint is:
- approximately 23% by weight of an organic acrylic emulsion;
- approximately 30.35% to about 65.25% by weight of water;
- approximately 0.4% by weight of a bactericidal compound;
- approximately 0.15% by weight of an antifoaming agent;
- approximately 1% by weight of a blending agent;
- approximately 2% by weight of bioregulators;
- approximately 0.2% by weight of a cellulose thickener; and
- approximately 42.9% to about 8% by weight of chlorophyll pigment.

The organic acrylic emulsion may be obtained from sugar or bamboo cane.

## Claims

1. A paint composition containing chlorophyll, comprising:
a) approximately 23% by weight of an organic acrylic emulsion;
b) approximately 30.35% to about 65.25% by weight of water;
c) approximately 0.4% by weight of a bactericidal compound;
d) approximately 0.15% by weight of an antifoaming agent;
e) approximately 1% by weight of a blending agent;
f) approximately 2% by weight of bioregulators;
g) approximately 0.2% by weight of a cellulose thickener; and
h) approximately 42.9% to about 8% by weight of chlorophyll pigment.

2. The paint composition of claim 1, wherein the organic acrylic emulsion is derived from sugar cane.

3. The paint composition of claim 1, wherein the organic acrylic emulsion is derived from bamboo cane.

4. The paint composition of claim 1, wherein the bactericidal compound acts as both a disinfectant and an antiseptic.

5. The paint composition of claim 1, wherein the antifoaming agent is a silicone compound for controlling foam formation.
